(19) Europäisches Patentamt
European Patent Office
Office européen des brevets

(11) **EP 3 332 867 A1**

(12) **EUROPEAN PATENT APPLICATION**

(43) Date of publication:
**13.06.2018 Bulletin 2018/24**

(21) Application number: **16202944.1**

(22) Date of filing: **08.12.2016**

(51) Int Cl.:
*B01J 20/04* (2006.01)    *B01J 20/24* (2006.01)
*B01J 20/28* (2006.01)    *B01J 20/32* (2006.01)
*B01J 20/20* (2006.01)    *B01J 20/22* (2006.01)
*B01J 20/06* (2006.01)    *B01D 53/02* (2006.01)
*C10G 2/00* (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Antecy B.V.**
**3871 KM Hoevelaken (NL)**

(72) Inventor: **O'Connor, Paul**
**3871KM Hoevelaken (NL)**

(54) **SHAPED PARTICLES FOR CO2 CAPTURING AND CONVERSION**

(57) The present invention relates to Cellulose and/or Lignin used as catalyst and/or sorbent support, carrier and/or binder, leading to strong but flexible structures such as porous monoliths, wire mesh or shaped particles which can accommodate variations in catalyst and/or sorbent loadings as well as temperature and pressure fluctuations and humidity swings, this without loss of sorption capacity and mechanical integrity to prevent attrition, fines, losses etc. This sorbent/catalyst can be produced from waste biomass and can be recycled, reused, dissolved and re-precipitated making use of solvents like $ZnCl_2$.

Figure 1.

**EP 3 332 867 A1**

**Description**

**Summary of invention**

The existing technology to capture CO2 from gas streams is based on a wet scrubbing process by Gas-Liquid contacting which is mass transfer limited, making use of amines. These amines are costly and suffer from issues related to corrosion, amine degradation and solvent losses. Above all the amines also have toxicity issues and can degrade to nitrosamines, which are carcinogenic. Resuming the present state of the art technology for the capturing of CO2 exhibits several serious challenges:

- Liquid-Gas (CO2) contacting which is mass transfer limited.
- Amine toxicity and potential carcinogenic.
- Amine degradation and costs.

There is a need for a technology, which addresses these drawbacks in order to enable low cost CO2 capturing, conversion and/or sequestration.
Solid-Gas adsorption have been developed based on amines, but these exhibit similar issues as the liquid amine systems, whereby the cost, complexity and low stability of these systems will lead to excessive high costs.
Low cost alternative for amines are carbonate systems as reported by:

SOO CHOOL LEE ET AL: "CO2 absorption and regeneration of alkali metal-based solid sorbents", CATALYS/S TODA Y 111, 15 December 2015 (2015-12-15), pages 385-390, XP025ZZ6763, DOI: 10.1016/j.cattod.2005.10.051. KRIJN P. DE JONG ET AL: "Carbon Nanofiber-Supported K2CO3 as an Efficient Low- Temperature Regenerable CO2 Sorbent for Post-Combustion Capture". INDUSTRIAL & ENGINEERING CHEMISTRY RESEARCH 52, 14 August 2013 (2013- 08-14), pages 12812-12818, DOI: 10.1021/ie4017072.

The most preferred carbonated are those supported on Carbon instead of inorganic supports, see: SOO CHOOL LEE ET AL: "CO2 absorption and regeneration of alkali metal-based solid sorbents", CA TALYS/S TODAY 111, 15 December 2015 (2015-12-15), pages 385-390, XP025116763, DOI: 10.1016/j.cattod.2005.10.051. KRIJN P. DE JONG ET AL: "Carbon Nanofiber-Supported K2CO3 as an Efficient Low-Temperature Regenerable CO2 Sorbent for Post-Combustion Capture". INDUSTRIAL & ENGINEERING CHEMISTRY RESEARCH 52, 14 August 2013 (2013- 08-14), pages 12812-12818, DOI: 10.1021/ie4017072.
Unfortunately Existing Carbon supports are often brittle and therefore have a limited life span, especially when they also need to be transported, such as in conveyor, solids flow, fluidized flow conditions, or dilute solids-gas transport conditions. See: WO 2016050944 *(ANTECY B. V.[NL]) 07 April 2016 (2016- 04 - 0 7).* YOUNG CHEOL PARK ET AL: "Performance analysis of K-based KEP-CO2P1 solid sorbents in a bench-scale continuous dry-sorbent CO2 capture process", KOREAN J. CHEM. ENG., vol. 33, no. 1, accepted 27 April 2015 (2015-04-27), pages 73-79 (2016), pISSN: 0256-1115, eISSN: 1975-7220, DOI: 10.1007/s11814-015-0091-1.
On the other hand there is a strong need to increase the number of adsorption/ desorption cycles per day (N) in order to reduce the quantity of Sorbent required per CO2 to be adsorbed as this in fact will have a significant impact on the physical size of the Absorber and Desorber and therefore also the capital expenditure (CAPEX) costs.
To improve the performance of the overall process and to reduce the costs besides solid sorbent capacity, the sorbent kinetics (mass transfer and accessibility of the sorbent sites) and the integrity of the sorbent physical properties (flow ability, particle integrity, strength and attrition resistance) are of great importance.
Preferably free flowing particles are required to transport the sorbent within short cycles from hours to minutes and possibly even seconds from the absorber to the desorber stage.

**Technical Problem**

There is presently a need for capturing CO2 from gaseous streams such as Flue gas from combustion, CO2 wastes from other sources and even directly CO2 from Air in order to limit human impact on Global CO2 levels and related global weather and climate changes.
Preferably the captured CO2 should be able to be converted to valuable components (fuels, chemicals, building materials, polymers) or stored permanently as in the various Carbon Capturing and sequestration schemes being studied today.

**Solution to Problem**

The present invention solves this problem by producing shaped particles for CO2 capturing combining a hybrid organic-inorganic sorbent consisting of:

a) an organic Carbon based support and/or binder.
b) an inorganic support and/or binder.
c) inorganic oxides and/or Carbonates dispersed on 1) and/or 2) as CO2 capturing sorbent and/or conversion catalysts.
d) optionally a Nitrogen containing organic component can be added to further enhance the performance of the sorbent.

This combination addresses the requirements set in the foregoing.

**Description of embodiments**

The following describes the large effect of N (Number of cycles per day) on the Sorbent performance:

**Dry Sorbent Performance - Criteria**

Solid Sorbent Net Capacity: **SC** *(SC = Molecules or m3 CO2 produced per m3 solid Sorbent per cycle)*
Number of Cycles per day: **N**
CO2 m3 produced: **CO2 (m3)**
Sorbent volume: **S (m3)**

$$CO2\ (m3) = S\ (m3) \times SC \times N$$

$$Sorbent\text{-} Reactor\ Volume \sim CO2\ (m3) / (SC \times N)$$

- Large effect of **N** on Sorbent and reactor volume and costs.
- High **N** requires fast kinetics (mass transfer) and strong particles.
- High **N** requires robust and stable sorbent. (K2CO3!)

As indicated above besides solid sorbent capacity, the sorbent kinetics (mass transfer and accessibility of the sorbent sites) and the integrity of the sorbent physical properties (flow ability, particle integrity, strength and attrition resistance) are of great importance.

Free flowing particles are required to transport the sorbent within short cycles (minutes, seconds) from the absorber to the desorber stage. The foregoing requirements are usually contradictory.

This invention is based on a combination of the chemistry of Inorganic Oxides and/or Carbonate systems such as the K2CO3 systems as investigated by Krijn de Jong et al (2013) on a Carbon based support.

*See:* KRIJN P. DE JONG ET AL: "Carbon Nanofiber-Supported K2CO3 as an Efficient Low-Temperature Regenerable CO2 Sorbent for Post-Combustion Capture", INDUSTRIAL & ENGINEERING CHEMISTRY RESEARCH 52, 14 August 2013 (2013- 08-14), pages 12812-12818, DOI: 10.1021/ie4017072*.*

Obviously the Carbon Nano Fibers (CNF) as mentioned by de Jong et al cannot be used as such because of the high costs ($\pm$ 10 Euro's/kg) and the difficulty to form into attrition resistant hard sorbent particles.

One can foresee a similar problem with Lackner's (2016) "Shaggy" sorbents, which (Ref:https://www.insidescience.org/video/what's-white-shaggy-and-could-help-reduce-carbon-dioxide-80) are very susceptible to attrition and difficult to form into a flowing sorbent.

**Further embodiments of this invention in following examples**

The described invention whereby the Nitrogen containing compound in the disclosed material originates from biomass species, or biomass waste such as Lignin or Algae.

The inorganic binder used in composition of the described material can be reduced to zero.

The described sorbent or catalyst materials or particles can be recycled by treating and/or dissolving with ZnCl2.

The process to capture and convert CO2 by means of described materials can be used in the process where the absorbed CO2 from is converted with hydrogen to form a carbon (nano) fiber.

The process to capture and convert CO2 by means of described materials can be is converted into fuels and or chemicals using a bio-catalyst and or an enzyme.

**Example**

Example 1:

Compositions containing:

Al2O3: Alumina Binder
C-NF: Carbon Nano Fibers (Commercial)
Z-NCF: Carbon Fibers produced via ZnCl2 cellulose treatment as described in WO 2016/087186 whereby the hydrolysis of cellulose is minimized.

**Binder (Al₂O₃) required for Particle Formation**
**Estimated % Binder**

| Sample | % Al2O3 required to form particle: |
|---|---|
| NCF | > 60 – 80% |
| Z-NCF | 20 – 30% |

*Figure 1.*

Example 2:

The base case for the Sorbent development, are shaped particles produced with Active Carbon as particle and support impregnated with K2CO3. The physical properties of these particles are limited (strength) as the accessibility (kinetics) meaning that the number of cycles and hence performance will be limited.

## Sorbent Development Path

| Particle | Support | Activity | Cost | Strength (LA-AI) | Kinetics (AAI) |
|----------|---------|----------|------|------------------|----------------|
|          | CNF     | K2CO3    | --   | --               | +              |
| AC       | AC      | K2CO3-i  | O    | O                | O (Base case)  |
| F0       | C-K2CO3-i |        | +    | +                | +              |
| F1       | C-K2CO3-cca |      | O    | +                | +              |
| F2       | CF1-K2CO3 |        | +    | ++               | ++             |
| F2       | CF2-K2CO3 |        | +    | ++               | +++            |

*Figure 2.*

The technology has developed is to make use of the high accessibility and strength of inorganic based catalysts as applied in Fluid Catalytic Cracking with the good sorbent performance of the systems as indicated by Krijn de Jong et al.

Examples:

F0: As base a High accessibility inorganic, e.g. Alumina binder sorbent particle is applied wherein K2CO3 impregnated Active Carbon particles are imbedded.
F1: A Carbon coated catalysts (CCA) is formed, for instance by treating a High Accessibility Inorganic, e.g. Alumina binder sorbent system with an organic Potassium molecule (e.g. Potassium Acetate) under pyrolysis conditions.
F2: Potassium loaded nano-cellulose fibers (CF-K2CO3) are imbedded in a High Accessibility Inorganic, e.g. Alumina binder sorbent system.
F3: Same as F2 whereby part or all of the role of binding is replaced by biomass (waste) based nano-cellulose and/or lignin.
F4: A full Cellulose/Lignin based high accessibility strong particle with K2CO3.

Example 3:

The following are compositions, which are embodiments of this invention.

Base Case:

Active Carbon impregnated with 10% and 25% K2CO3

| $AK_e$ | AC | 10 and 25 % K2CO3 | Extrudates. Beads 2-3 mm |
|--------|----|-------------------|--------------------------|
| $AK_p$ | AC | 10 and 25 % K2CO3 | Microspheres, MS |

Pure Cellulose and Lignin impregnated with 10% K2CO3

| CK | Cellulose | 10% K2CO3 | MS |
|----|-----------|-----------|-----|
| LK | Lignin    | 10% K2CO3 | MS |

Cellulose produced by ZnCl2 dissolution followed by precipitation as described in WO 2016/087186.

| | | | |
|---|---|---|---|
| ZCK | Z-NC | 10% K2CO3 | MS - impregnated with K2CO3 |
| ZCZ | Z-NC | 10% ZnO | MS - impregnated with ZnO |
| ZCA | Z-NC | 10% MEA (Amine) | MS - impregnated Amine (MEA) |

Dried Algae impregnated with K2CO3

| | | |
|---|---|---|
| DAK Algae | 10% K2CO3 | MS |

Sorbent compositions comprising 20%, 50% and 80% of a binding (peptizable) Alumina incorporating 80%, 50% and 20% of the above compositions

These compositions are evaluated by the following performance tests:

Adsorption at 3 CO2 levels: 400 ppm, 2%, 10%
Desorption with Steam at T=80oC and T=120oC.
Particle strength before and after >10 cycles
CO2 adsorption capacity before and after > 10 cycles

**Claims**

1. Attrition resistant shaped porous materials or particles comprising:

   a) an organic Carbon based support and/or binder,
   b) an inorganic support and/or binder,
   c) inorganic oxides and/or Carbonates dispersed on a) and/or b) as CO2

   capturing sorbent and/or as conversion catalysts.

2. Attrition resistant shaped porous materials or particles comprising:

   a) 20-80% of an organic Carbon based material,
   b) 20-80% of an inorganic support and/or binder,
   c) inorganic oxides and/or Carbonates dispersed on a) and/or b) as CO2

   capturing sorbent and/or as conversion catalysts.

3. Attrition resistant shaped porous materials or particles comprising:

   a) 80-100% of an organic Carbon based material,
   b) 0-20% of an inorganic support and/or binder,
   c) inorganic oxides and/or Carbonates dispersed on a) and/or b) as CO2

   capturing sorbent and/or conversion catalysts.

4. Claim 1 to 3, whereby b) is an Alumina, Silica-Alumina, Magnesia, Titania and/or Clays containing Silica and/or Magnesia and/or Titania and/or Alumina and/or Zinc.

5. Claim 4, whereby the inorganic component is peptizable forming particles smaller than 1 microns and has binding properties, which, contributes to the physical integrity of the overall particle.

6. Claim 2, 3, 4, and 5 whereby c) is a cellulosic material with a particle size smaller than 3 microns, preferably with an average particle size of 1 microns or less.

7. Claim 6, whereby the cellulosic material has binding properties, which, contributes to the physical integrity of the overall particle.

8. Claim 2, 3, 4 and 5 whereby c) comprises material from a biomass origin such as cellulose, lignin, seaweed and/or algae.

9. Any of the previous claims whereby the particles produced are smaller than 5 mm, preferably microspheres smaller than 1 mm.

10. Any of the previous claims whereby c) comprises an inorganic carbonate preferably: K2CO3, KHCO3, NaCO3, and NaHCO3.

11. Any of the previous claims whereby c) comprises inorganic metal oxides preferably single or mixed oxides consisting of Zn, Fe, Cu, Ca and Mg.

12. Any of the previous claims whereby an organic nitrogen-containing compound, such as an amine (e.g. monoethanolamine (MEA) is added to the particle composition.

13. Any of the previous claims whereby the ratio of organic binder to inorganic binder is greater than 1, preferably greater than 5.

14. A process to capture CO2 comprising:

a) step 1 in which CO2 is adsorbed from a CO2 containing stream with a sorbent as described in the previous claims.
b) step 2 in which CO2 is desorbed in a more concentrated form.
c) step 3 in which the concentrated CO2 is converted with hydrogen.

15. A process to capture and convert CO2 comprising:

a) step 1 in which CO2 is adsorbed from a CO2 containing stream with a sorbent as described in the previous claims.
b) step 2 in which the absorbed CO2 from Step 1 is converted with hydrogen to form a liquid hydrocarbon with the same sorbent (=catalyst) as described in a).

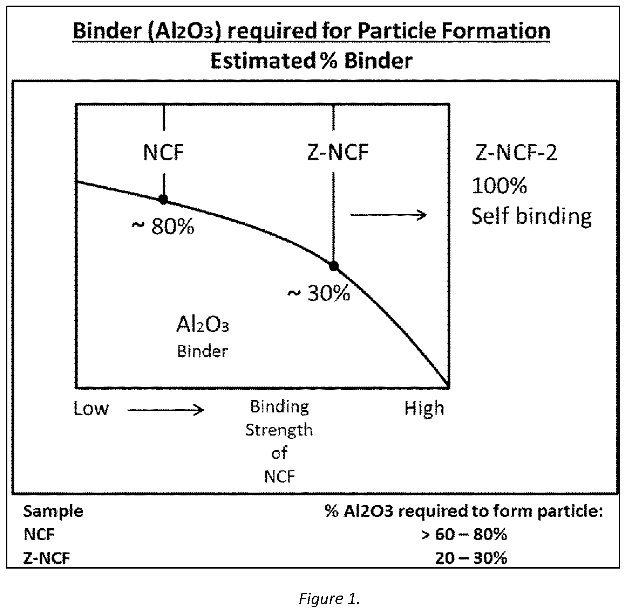

*Figure 1.*

## Sorbent Development Path

| Particle | Support | Activity | Cost | Strength (LA-AI) | Kinetics (AAI) |
|----------|---------|----------|------|------------------|----------------|
|          | CNF     | K2CO3    | --   | --               | +              |
| AC       | AC      | K2CO3-i  | O    | O                | O (Base case)  |
| F0       |         | C-K2CO3-i | +   | +                | +              |
| F1       |         | C-K2CO3-cca | O | +                | +              |
| F2       |         | CF1-K2CO3 | +   | ++               | ++             |
| F2       |         | CF2-K2CO3 | +   | ++               | +++            |

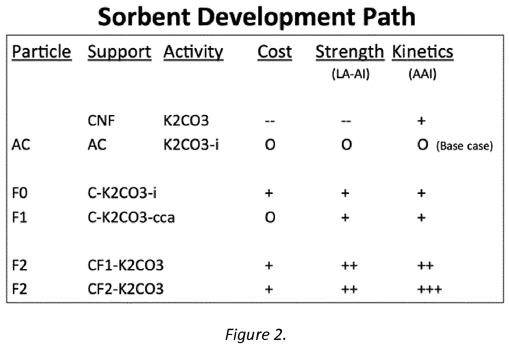

*Figure 2.*

Europäisches
Patentamt

European
Patent Office

Office européen
des brevets

**EUROPEAN SEARCH REPORT**

Application Number

EP 16 20 2944

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 8 840 706 B1 (SRINIVASACHAR SRIVATS [US]) 23 September 2014 (2014-09-23) * column 3, lines 63-64; column 6, line 45 ; column 3, line 66; column 5 , line 6 ; column 5, lines 17-19 ; column 4, lines 29-32; column 6, lines 47-49; column 5, lines 17-19 ; column 10, lines 31-38; column 6, line 45 ; column 4, line 42 ; column 5, lines 5-6; column 6, lines 22-23; column 3, lines 56-57; column 4, line 20 * | 1-13 | INV. B01J20/04 B01J20/24 B01J20/28 B01J20/32 B01J20/20 B01J20/22 B01J20/06 B01D53/02 C10G2/00 |
| X | US 2012/273720 A1 (LEE JOONG-BEOM [KR] ET AL) 1 November 2012 (2012-11-01) * page 2, paragraph 28 * * page 2, paragraph 37 * * page 2, paragraph 30 * * page 3, paragraph 54 * | 1,4,9,10 | |
| X | US 2008/119356 A1 (RYU CHONG-KUL [KR] ET AL) 22 May 2008 (2008-05-22) * page 4, paragraph 46 * * page 2, paragraph 30 * * page 3, paragraph 36-38 * * page 3, paragraph 39 * * page 4, paragraph 52 * | 1,4,9,10 | TECHNICAL FIELDS SEARCHED (IPC) B01J B01D C10G |
| X | WO 2014/012963 A1 (ANTECY BV [NL]) 23 January 2014 (2014-01-23) * page 4, paragraphs 25, 26 * * page 3, paragraphs 11, 20, 21 * * page 2, paragraph 7 * | 1,3,4,10 | |

-/--

The present search report has been drawn up for all claims

| Place of search | Date of completion of the search | Examiner |
|---|---|---|
| The Hague | 19 June 2017 | Hilgenga, Klaas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

# EUROPEAN SEARCH REPORT

Application Number

EP 16 20 2944

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2015/071443 A1 (ANTECY BV [NL]) 21 May 2015 (2015-05-21) * page 3, paragraph 12 * * page 2, paragraph 10 * * page 3, paragraphs 14, 15 * ----- | 1,3,4, 10,14 | |
| A | WO 2012/119958 A1 (ANTECY BV [NL]; O'CONNOR PAUL [NL]; DAAMEN SJOERD [ES]) 13 September 2012 (2012-09-13) * page 3, paragraph 9 * * page 5, paragraphs 24, 25 * ----- | 15 | |

TECHNICAL FIELDS
SEARCHED (IPC)

The present search report has been drawn up for all claims

| Place of search | Date of completion of the search | Examiner |
|---|---|---|
| The Hague | 19 June 2017 | Hilgenga, Klaas |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 16 20 2944

This annex lists the patent family members relating to the patent documents cited in the above-mentioned European search report.
The members are as contained in the European Patent Office EDP file on
The European Patent Office is in no way liable for these particulars which are merely given for the purpose of information.

19-06-2017

| Patent document cited in search report | | Publication date | Patent family member(s) | | Publication date |
|---|---|---|---|---|---|
| US 8840706 | B1 | 23-09-2014 | NONE | | |
| US 2012273720 | A1 | 01-11-2012 | AU | 2009354628 A1 | 31-05-2012 |
| | | | CA | 2779427 A1 | 05-05-2011 |
| | | | GB | 2490261 A | 24-10-2012 |
| | | | GB | 2490261 B | 08-03-2017 |
| | | | JP | 6080122 B2 | 15-02-2017 |
| | | | JP | 2013508153 A | 07-03-2013 |
| | | | US | 2012273720 A1 | 01-11-2012 |
| | | | WO | 2011052829 A1 | 05-05-2011 |
| US 2008119356 | A1 | 22-05-2008 | US | 2006148642 A1 | 06-07-2006 |
| | | | US | 2008119356 A1 | 22-05-2008 |
| WO 2014012963 | A1 | 23-01-2014 | AU | 2013292075 A1 | 29-01-2015 |
| | | | CA | 2878664 A1 | 23-01-2014 |
| | | | EP | 2874728 A1 | 27-05-2015 |
| | | | WO | 2014012963 A1 | 23-01-2014 |
| WO 2015071443 | A1 | 21-05-2015 | CA | 2933422 A1 | 21-05-2015 |
| | | | EP | 3068750 A1 | 21-09-2016 |
| | | | US | 2016289149 A1 | 06-10-2016 |
| | | | WO | 2015071443 A1 | 21-05-2015 |
| WO 2012119958 | A1 | 13-09-2012 | EP | 2681293 A1 | 08-01-2014 |
| | | | US | 2014000157 A1 | 02-01-2014 |
| | | | WO | 2012119958 A1 | 13-09-2012 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2016050944 A

- WO 2016087186 A

### Non-patent literature cited in the description

- **SOO CHOOL LEE et al.** CO2 absorption and regeneration of alkali metal-based solid sorbents. *CATALYS/S TODA Y 111,* 15 December 2015, 385-390
- **KRIJN P. DE JONG et al.** Carbon Nanofiber-Supported K2CO3 as an Efficient Low- Temperature Regenerable CO2 Sorbent for Post-Combustion Capture. *INDUSTRIAL & ENGINEERING CHEMISTRY RESEARCH,* 14 August 2013, vol. 52, 12812-12818
- **SOO CHOOL LEE et al.** CO2 absorption and regeneration of alkali metal-based solid sorbents. *CA TALYS/S TODAY 111,* 15 December 2015, 385-390

- **KRIJN P. DE JONG et al.** Carbon Nanofiber-Supported K2CO3 as an Efficient Low-Temperature Regenerable CO2 Sorbent for Post-Combustion Capture. *INDUSTRIAL & ENGINEERING CHEMISTRY RESEARCH,* 14 August 2013, vol. 52, 12812-12818
- **YOUNG CHEOL PARK et al.** Performance analysis of K-based KEP-CO2P1 solid sorbents in a bench-scale continuous dry-sorbent CO2 capture process. *KOREAN J. CHEM. ENG.,* 27 April 2015, vol. 33 (1), 73-79
- **KRIJN DE JONG et al.** *Carbon based support,* 2013